Europäisches Patentamt

European Patent Office

Office européen des brevets

(19)

(11) Veröffentlichungsnummer : **0 099 061**
**B1**

(12)  # EUROPÄISCHE PATENTSCHRIFT

(45) Veröffentlichungstag der Patentschrift :
21.01.87

(51) Int. Cl.⁴ : **B 62 B   5/02**

(21) Anmeldenummer : **83106597.4**

(22) Anmeldetag : **06.07.83**

(54) **Sackkarre mit Treppensteigvorrichtung.**

(30) Priorität : 14.07.82 DE 3226294

(43) Veröffentlichungstag der Anmeldung :
25.01.84 Patentblatt 84/04

(45) Bekanntmachung des Hinweises auf die Patenterteilung : 21.01.87 Patentblatt 87/04

(84) Benannte Vertragsstaaten :
FR GB IT SE

(56) Entgegenhaltungen :
DE-A- 1 505 834
DE-A- 2 908 328
US-A- 2 641 325

(73) Patentinhaber : **Alber, Ulrich**
**Waldstrasse 64**
**D-7470 Albstadt 16-Laufen (DE)**

(72) Erfinder : **Alber, Ulrich**
**Waldstrasse 64**
**D-7470 Albstadt 16-Laufen (DE)**

(74) Vertreter : **Möbus, Rudolf, Dipl.-Ing.**
**Hindenburgstrasse 65**
**D-7410 Reutlingen (DE)**

EP 0 099 061 B1

Jouve, 18, rue St-Denis, 75001 Paris, France

**Beschreibung**

Die Erfindung betrifft eine mit Handgriffen versehene, einachsige Sackkarre mit zwei Laufrädern und mit einer elektromotorisch betriebenen Treppensteigvorrichtung.

Eine mit den vorstehend genannten Merkmalen versehene Sackkarre ist durch die DE-A-15 05 834 bekannt. Diese Sackkarre weist eine an Schwenkarmen einer angetriebenen Welle sitzende Stützwelle auf, die sich auf einer Treppenstufe abstützen kann. Bei dieser Transportvorrichtung wird die Sackkarre über die Schwenkarme bei aufliegender Stützwelle hochgezogen. Bei diesem Hochziehen muß das beim Abheben der Sackkarre vom Boden oder einer Treppenstufe durch die Last ausgeübte Drehmoment von der Bedienungsperson an den Handgriffen des Handkarrens aufgefangen werden. Besonders nachteilig ist hierbei zu vermerken, daß dieses Drehmoment schlagartig wirksam wird und die Bedienung der ganzen Vorrichtung somit eine hohe Konzentration der die Sackkarre führenden Person erforderlich macht, damit die Sackkarre mit der Last nicht von der Treppe abkippt.

Der Erfindung liegt die Aufgabe zugrunde, eine mit einer angetriebenen Treppensteigvorrichtung versehene Sackkarre so auszubilden, daß sie einen sicheren, von einer Bedienungsperson leicht durchführbaren und kontrollierbaren Transport einer Last über eine Treppe erlaubt.

Die gestellte Aufgabe wird mit einer Sackkarre der eingangs genannten Art erfindungsgemäß dadurch gelöst, daß der drehrichtungsumschaltbare Elektromotor, ein Untersetzungsgetriebe, eine Batterie und die zwei koaxialen Laufräder an einem Fahrkörper der Sackkarre angeordnet sind, an welchem ein die zu transportierende Last aufnehmender, die Handgriffe tragender und zwei koaxiale Stützräder aufweisender Tragteil relativverstellbar gelagert ist, und daß der Elektromotor mit einem am Fahrkörper gelagerten Kurbeltrieb gekoppelt ist, dessen Kurbel am Tragteil angreift. Das vom Elektromotor über ein selbsthemmendes Untersetzungsgetriebe kontinuierlich betreibbare Kurbelrad kann dabei vorteilhafterweise konzentrisch zu einem Laufrad angeordnet sein, wobei sein Kurbelarm kürzer als der Laufradradius ist und mit dem Tragteil gelenkig verbunden ist.

Bei der erfindungsgemäß ausgebildeten Sackkarre wird durch die Treppensteigvorrichtung das Transportgut zusammen mit dem Tragteil der Sackkarre nicht hochgezogen, sondern hochgedrückt, so daß an den Handgriffen des Tragteiles keine krassen, von der Bedienungsperson aufzufangenden Drehmomentschwankungen auftreten. Durch die relativverstellbare Anordnung von Fahrkörper und Tragteil der Sackkarre kann mittels der Treppensteigvorrichtung der Tragteil von der Lauffläche um einen Höhenbetrag angehoben werden, welcher dem Abstand der Transportfläche von Kleintransportern von der Straßenebene entspricht. Die Treppensteigvorrichtung der erfindungsgemäß ausgebildeten Sackkarre ist also gleichzeitig eine Lade- und Entladehilfe. Durch ein Betätigen der Treppensteigvorrichtung lassen sich bei auf dem Boden aufgesetztem Tragteil die Laufräder mit dem Fahrkörper der Sackkarre höhenverstellen, wodurch die Aufnahme einer am Boden sitzenden Last auf die Sackkarre erleichtert wird. Auch lassen sich die Laufräder mittels der Treppensteigvorrichtung in eine Relativstellung zu den Stützrädern des Tragteiles bringen, in welcher die Sackkarre mit der aufgenommenen Last auf allen vier Rädern ruhend abgestellt werden kann. Auch kann die Sackkarre jederzeit wie eine normale Sackkarre ohne Einsatz der Treppensteigvorrichtung benutzt werden.

Zweckmäßig kann der Fahrkörper mit mindestens einer Führungsstange versehen sein, die in einem Führungszapfen endet, der in einer im Tragteil ausgebildeten Führungsnut gelagert ist. Die Abtriebswelle des Untersetzungsgetriebes kann über eine Antriebskette mit dem Kurbelrad der Treppensteigvorrichtung gekoppelt sein. Die Laufräder können verteilhafterweise einen Durchmesser aufweisen, der mindestens 25 cm beträgt, und der kürzeste Abstand der Stützräder vom Angriffspunkt des Kurbelarmes am Stützteil kann zweckmäßig der Kurbelarmlänge entsprechen. Auf diese Weise lassen sich bei den üblichen Treppenmaßen und im Hinblick auf den üblichen Schwerpunktbereich der von der Sackkarre aufgenommenen Lasten für die Bedienungsperson günstige Neigungstellungen der Sackkarre auf der Treppe erreichen.

Nachfolgend wird ein Ausführungsbeispiel einer erfindungsgemäß ausgebildeten Sackkarre anhand der beiliegenden Zeichnung näher erläutert.

Im einzelnen zeigen :

Figur 1 eine perspektivische Darstellung der Sackkarre, umbeladen und in einer Ruhestellung ;

Figur 2 eine schematisierte Seitenansicht der Sackkarre in ihrer normalen Laufstellung ;

Figur 3 eine Seitenansicht der Sackkarre an einem Treppenansatz mit hochgedrücktem Tragteil ;

Figur 4 eine Seitenansicht der Sackkarre, mit ihren Stützrädern auf einer Treppenstufe aufsitzend, beim Nachholen des Fahrkörpers mit den Laufrädern ;

Figur 5 eine Seitenansicht der auf einer Treppenstufe auf den nachgeholten Laufrädern abgestützten Sackkarre beim erneuten Hochdrücken ihres Tragteiles zum Aufbringen der Stützräder auf die nächste Treppenstufe ;

Figur 6 eine Seitenansicht der Sackkarre in ihrer Lastaufnahmestellung mit angehobenen Laufrädern ;

Figur 7 eine Seitenansicht der Sackkarre in Lastaufnahmestellung vor einem Anheben der Laufräder ;

Figur 8 eine Seitenansicht einer beladenen Sackkarre in einer Abstellposition.

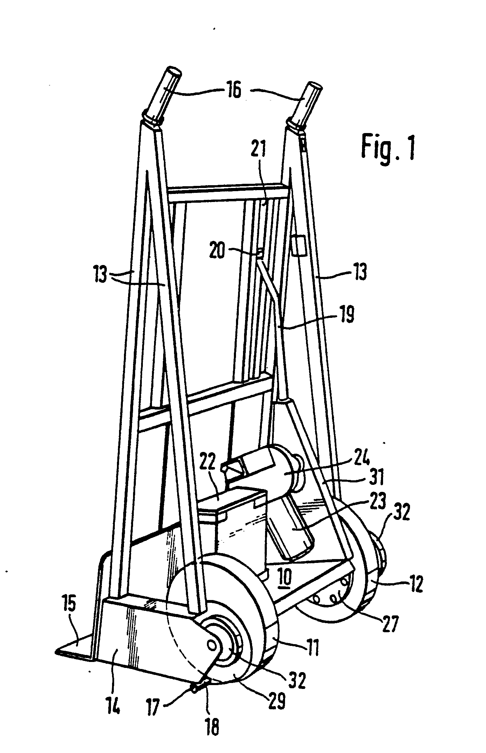

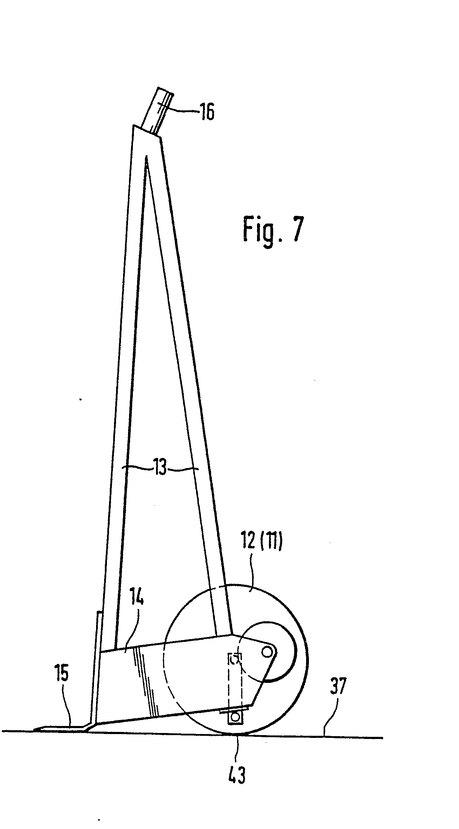

Fig. 1 und 7 zeigen die Sackkarre in einer Standstellung. Die Sackkarre besteht aus zwei relativ zueinander verstellbaren Teilen, nämlich einem Fahrkörper mit einer Plattform 10, an welcher zwei Laufräder 11 und 12 koaxial gelagert sind, und einem Tragteil, der einen Stützrahmen 13 mit unteren Seitenwänden 14 und einem Ladebord 15 umfaßt, und an dessen oberen Ende zwei Handgriffe 16 für die Bedienungsperson angeordnet sind. Die Koppelung des Fahrkörpers mit dem Tragteil erfolgt einmal über eine Gelenkstelle 17, an welcher ein Kurbelarm 18 der Treppensteigvorrichtung angreift, und über eine Führungsstange 19 des Fahrkörpers, die mit einem Führungszapfen 20 in einer Nut 21 im Rahmen 30 des Tragteiles gelagert ist.

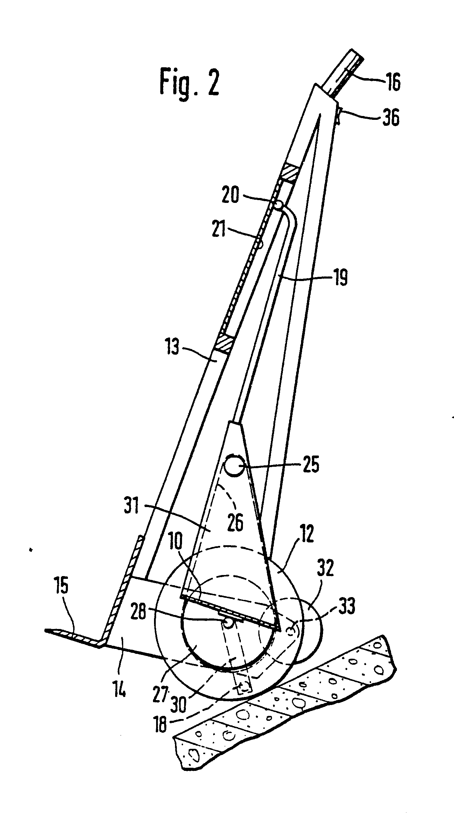

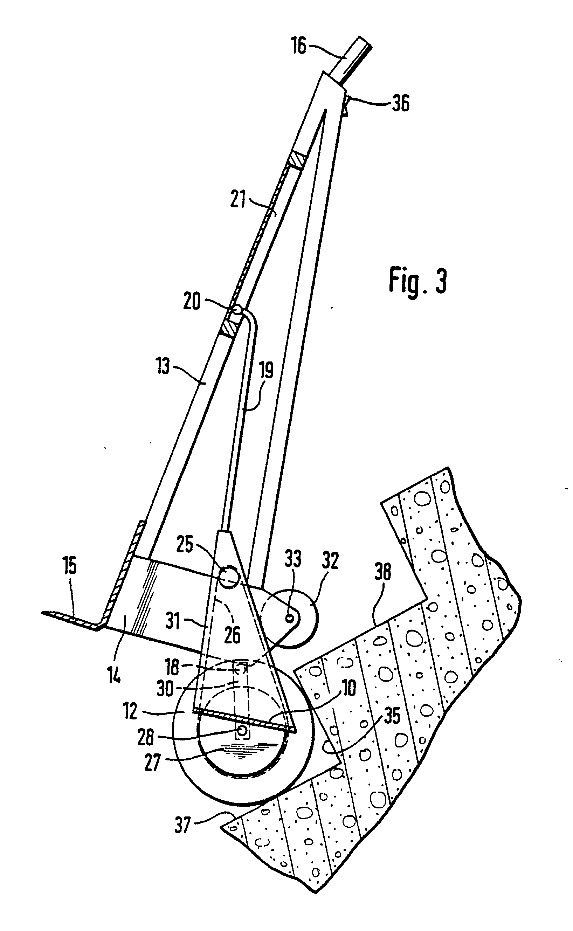

Auf der Plattform 10 des Fahrkörpers der Sackkarre sind eine am Bordnetz eines Transportfahrzeuges nachladbare Batterie 22, ein an die Batterie 22 angeschlossener Elektromotor 23 und ein nachgeschaltetes selbsthemmendes Untersetzungsgetriebe 24 befestigt. Auf der Abtriebswelle des Untersetzungsgetriebes ist ein aus den Fig. 2 und 3 ersichtliches Zahnritzel 25 befestigt, das als Antriebsrad für eine in den Fig. 2 und 3 mit einer gestrichelten Linie angedeutete Antriebskette 26 dient, die über ein koaxial zum Laufrad 12 angeordnetes Kettenrad 27 geführt ist. Mit dem Kettenrad 27 und vorteilhafterweise auch mit einem koaxial dazu auf einer gemeinsamen Welle 28 an der Plattform 10 gelagerten weiteren Antriebsrad 29 ist über jeweils einen aus den Fig. 2 und 3 ersichtlichen Kurbelarm 30 jeweils ein Kurbelzapfen 18 verbunden, der jeweils an einer der Seitenwandungen 14 des Tragteiles über eine Gelenkstelle 17 angreift. Die Antriebskette 26 ist innerhalb eines Schutzgehäuses 31 untergebracht. Die beiden Laufräder 11 und 12 sind auf der angetriebenen Welle 28 frei drehbar gelagert.

Am hinteren Ende der beiden Seitenwandungen 14 des Tragteiles der Sackkarre ist jeweils ein Stützrad 32 um eine parallel zur Antriebsachse 28 verlaufende Achse 33 frei drehbar gelagert. Die Laufräder 11, 12 und die beiden Stützräder 32 können mit einem griffigen Belag versehen sein.

Die Fig. 1 2 und 7 zeigen die Sackkarre in einer Relativstellung ihres Fahrkörpers und ihres Tragteiles, die als Grundfahrstellung bezeichnet werden kann, in welcher sich die Sackkarre auf ebenem Boden durch eine einzelne, an den Handgriffen 16 angreifende Bedienungsperson wie eine übliche Sackkarre verfahren und auch gemäß Fig. 1 und 7 abstellen läst. Soll mit der Sackkarre eine Treppe überwunden werden, wird mittels eines in der Nähe des Handgriffes 16 am Tragteil angeordneten elektrischen Schalters 36 der Elektromotor 23 in eine der beiden möglichen Drehrichtungen geschaltet. Der Elektromotor 23 bringt das Kettenrad 27 und das mit ihm starr gekoppelte koaxiale Rad 29 in eine relativ langsame Drehung, die in den Fig. 2 und 3 im Uhrzeigersinne erfolgt. Diese Drehbewegung machen die mit den Rädern 27 und 29 fest verbundenen Kurbelarme 30 mit. Die an den Seitenwandungen 14 des Tragteiles der Sackkarre über die Gelenkstellen 17 angreifenden Kurbelzapfen 18 drücken dabei den Tragteil der Sackkarre in die aus Fig. 3 ersichtliche Stellung nach oben. In dieser oberen Lage, die auch zum Aufnehmen einer auf einer Ladefläche eines Transportfahrzeuges befindlichen Last eingenommen werden kann, befinden sich die Stützräder 32 in einem Abstand von der Lauffläche 37 der Laufräder 11 und 12, die höher ist als die übliche Höhe einer Treppenstufe.

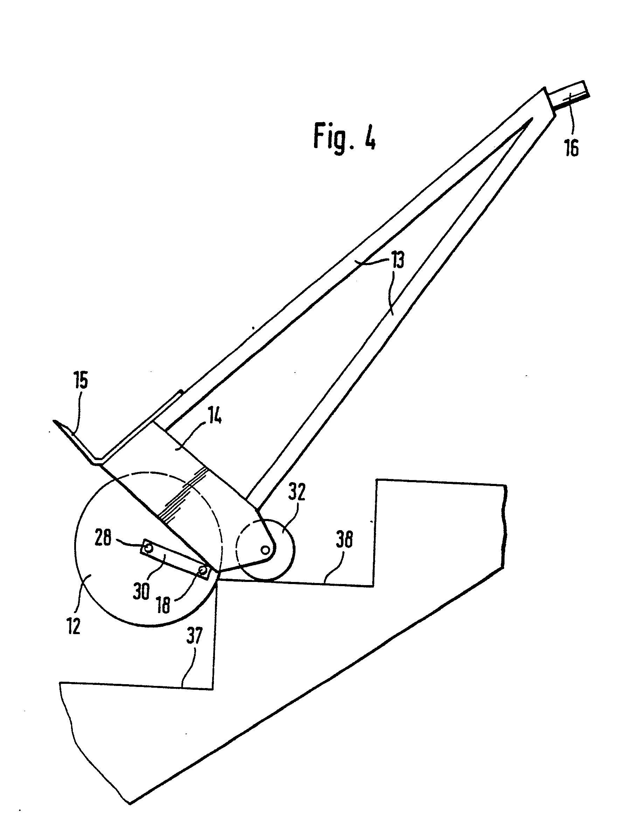

Nun wird die Sackkarre mit ihrem hochgestellten Tragteil auf der Lauffläche 37 gegen einen Treppenansatz 35 gefahren. Bei weiterdrehendem Elektromotor 23 werden die Kurbelarme 30 weiter im Uhrzeigersinne bewegt und dadurch wieder ein Absenken des Tragteiles der Sackkarre bewirkt, bis die beiden Stützräder 32 auf der ersten Treppenstufe 38 zur Anlage kommen. Nun ist der Tragteil der Sackkarre über die Stützräder 32 auf der Treppenstufe 38 abgestützt und festgelegt, was bedeutet, daß bei dem kontinuierlichen Weiterdrehen des Elektromotors 23 nun die Gelenkstellen 17 der Kurbelarme 18 am Tragteil der Sackkarre festgelegt sind, und die Kurbelarme 30 um diese Gelenkpunkte 17 verschwenken. Dies bedeutet ein Hochschwenken der Welle 28 mit den Antriebsrädern 27, 29 und dem gesamten Fahrkörper um die Kurbelzapfen 18, wie dies aus Fig. 4 ersichtlich ist. In den Fig. 4 bis 7 ist der besseren Übersichtlichkeit wegen der Fahrkörper der Sackkarre mit seinen Teilen, außer der Antriebsachse 28 und den Laufrädern 11, 12 nicht mehr dargestellt.

Bei dem Hochziehen des Fahrkörpers bei stationär bleibendem Tragteil der Sackkarre bewegt sich der Führungszapfen 20 der Führungsstange 19 des Fahrkörpers in der Führungsnut 21 des Rahmens 13 des Tragteiles der Sackkarre nach oben in Richtung auf die in Fig. 2 ersichtliche Stellung dieses Führungszapfens 20. Während der vorangegangenen Aufwärtsbewegung des Tragteiles gegenüber dem stationär verbliebenen Fahrkörper der Sackkarre in die aus Fig. 3 ersichtliche Stellung erfolgt dagegen eine relative Abwärtsverstellung des Führungszapfens 20 in der Führungsnut 21.

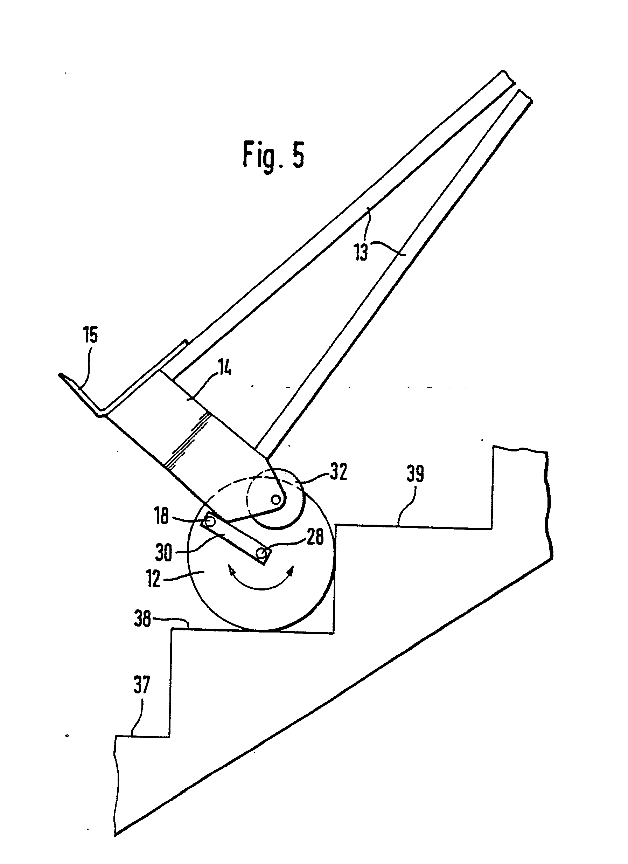

Bei der weiteren kontinuierlichen Drehbewegung der Antriebsräder 27 und 29 mit den Kurbelarmen 30 im Uhrzeigersinne werden die Laufräder 12 auf die Treppenstufe 38 eingeschwenkt, und sobald die Laufräder 11 und 12 der Sackkarre auf der Treppenstufe 38 zur Auflage kommen, ist wieder der Fahrkörper der Sackkarre festgelegt und die weitere Antriebsbewegung des Elektromotors bewirkt wieder ein Verschwenken der Kurbelarme 30 um die Antriebswelle 28, was ein erneutes Anheben des Tragteiles der Sackkarre bedeutet. Eine solche Anhebestellung ist in Fig. 5 dargestellt. Dieses Anheben und anschließende leichte Absenken erfolgt weiter, bis die Stützräder 32 auf der nächsten Treppenstufe 39 zur Auflage kommen. Dann wiederholt sich die in Verbindung mit Fig. 4 beschriebene Nachholbewegung des Fahrkörpers der Sackkarre.

Es verstehe sich, daß beim Abwärtsbewegen der Sackkarre auf einer Treppe die beschriebenen Bewegungsvorgänge genau umgekehrt ablaufen. Für die Abwärtsbewegung wird der Elektromotor am Schalter 36 in die andere Drehrichtung geschaltet.

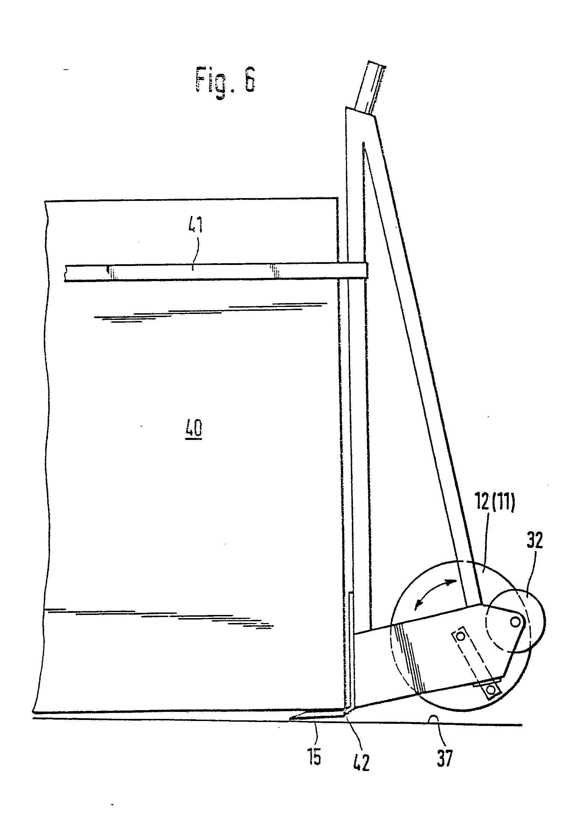

Aus den vorstehenden Ausführungen ist verständlich, daß sich in einer aus Fig. 7 ersichtlichen Standstellung der Sackkarre, in welcher eine Last — beispielsweise ein Karton 40 mit einer Haushaltmaschine, der sich durch ein Gurtband 41 am Rahmen 13 des Tragteiles der Sackkarre sichern läßt — auf das Ladebord 15 aufsetzbar ist, durch Betätigen des Elektromotors 23 der Fahrkörper der Ladekarre anheben und damit die Laufräder 11 und 12 von der Lauffläche 37 abheben lassen, wie dies in Fig. 6 dargestellt ist. Diese Stellung begünstigt das Kippen der beladenen Sackkarre aus ihrer Standstellung in ihre schräge Transportstellung, weil zunächst die Kippachse durch die Kante 42 des Ladebords 15 gebildet wird und erst anschließend die Kippachse nach rechts zu der in Fig. 7 bezeichneten Auflagestelle 43 der Laufräder 11 und 12 wandert. Die Bedienungsperson hat also in der Stellung nach Fig. 6 leichtere Arbeit beim Anheben der Last 40.

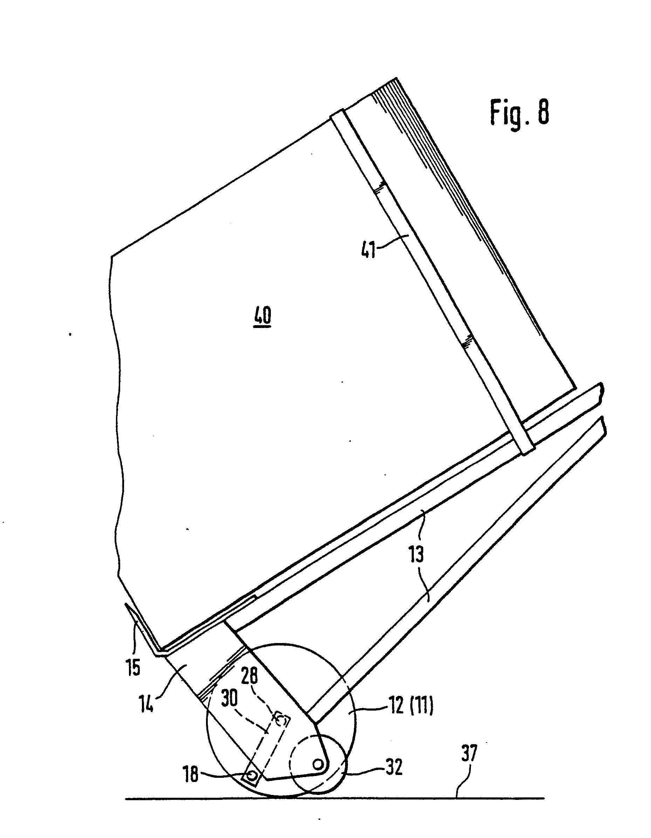

Fig. 8 zeigt den die Laufräder 11 und 12 tragenden Fahrkörper und den die Stützräder 32 aufweisenden Tragteil in einer Relativstellung, in welcher sich die beladene Sackkarre auf die Laufräder 11, 12 und die Stützräder 32 abstellen läßt, ohne zu kippen. Eine solche Abstellposition läßt sich für praktisch jede Last 40, also jeden Lastschwerpunkt, durch Einstellung der Relativstellung von Fahrkörper und Tragteil der Sackkarre finden.

## Patentansprüche

1. Mit Handgriffen (16) versehene, einachsige Sackkarre mit zwei koaxialen Laufrädern (11, 12) und mit einer elektromotorisch betriebenen Treppensteigvorrichtung mit einem drehrichtungsumschaltbaren Elektromotor (23), einem Untersetzungsgetriebe (24) und einer Batterie, dadurch gekennzeichnet, daß der drehrichtungsumschaltbare Elektromotor (23), das Untersetzungsgetriebe (24), die Batterie (22) und die zwei koaxialen Laufräder (11, 12) an einem Fahrkörper (Plattform 10) der Sackkarre angeordnet sind, an welchem ein die zu transportierende Last (40) aufnehmender, die Handgriffe (16) tragender und zwei koaxiale Stützräder (32) aufweisender Tragteil relativverstellbar gelagert ist, und daß der Elektromotor (23) mit einem am Fahrkörper gelagerten Kurbeltrieb (30/18) gekoppelt ist, dessen Kurbelzapfen (18) am Tragteil (Seitenwandung 14) angreift.

2. Sackkarre nach Anspruch 1, dadurch gekennzeichnet, daß das vom Elektromotor (23) über ein selbsthemmendes Untersetzungsgetriebe (24) kontinuierlich betreibbare Kurbelrad (27) konzentrisch zu einem Laufrad (12) angeordnet ist und sein Kurbelarm (30) kürzer als der Laufradradius ist und mit dem Tragteil gelenkig (Gelenkstelle 17) verbunden ist.

3. Sackkarre nach Anspruch 1 und/oder Anspruch 2, dadurch gekennzeichnet, daß der Fahrkörper mit mindestens einer Führungsstange (19) versehen ist, die in einem Führungszapfen (20) endet, der in einer im Tragteil ausgebildeten Führungsnut (21) gelagert ist.

4. Sackkarre nach einem der Ansprüche 1 bis 3, dadurch gekennzeichnet, daß die Abtriebswelle des Untersetzungsgetriebes (24) über eine Antriebskette (26) mit dem Kurbelrad (27) der Treppensteigvorrichtung gekoppelt ist.

5. Sackkarre nach einem der Ansprüche 1 bis 4, dadurch gekennzeichnet, daß die Laufräder (11, 12) einen Durchmesser von mindestens 25 cm aufweisen und der kürzeste Abstand der Achse (33) der Stützräder (32) vom Angriffspunkt (17) des Kurbelzapfens (18) am Tragteil (Seitenwandungen 14) etwa der Länge des Kurbelarmes (30) entspricht.

## Claims

1. A single-axle sack-trolley provided with handles 16 and having two coaxial running wheels (11, 12) and having an electric-motor-operated step-climbing device including an electric motor (23) which is reversible in its direction of rotation, a reduction gear (24) and a battery, characterised in that the electric motor (23) which is reversible in its direction of rotation, the reduction gear (24), the battery (22) and the two coaxial running wheels (11, 12) are arranged on a travel body (platform 10), of the sack-trolley on which is mounted, so as to be relatively adjustable, a carrying part for receiving the load (40) to be transported and bearing the handles (16) and having two coaxial supporting wheels (32), and in that the electric motor (23) is coupled with a crank gear (30/18) which is mounted on the travelling body and the crankpin (18) of which acts on the carrying part (side wall 14).

2. A sack-trolley according to claim 1, characterised in that a crank wheel (27) continuously operable by the electric motor (23) by way of a self-locking reduction gear (24) is arranged concentrically to one running wheel (12) and its crank arm (30) is shorter than the running wheel radius and is connected hingedly (hinge location 17) to the carrying part.

3. A sack-trolley according to claim 1 and/or 2, characterised in that the travelling body is provided with at least one guide rod (19) which culminates in a guide pin (20) which is mounted in a guide groove (21) formed in the carrying part.

4. A sack-trolley according to one of claims 1 to 3, characterised in that the power-take-off shaft of the reduction gear (24) is coupled by way of a driving chain (26) with the crank wheel (27) of the step-climbing device.

5. A sack-trolley according to one of claims 1 to 4, characterised in that the running wheels (11, 12) have a diameter of at least 25 cm and the shortest distance of the axis (33) of the supporting wheels (32) from the point of application (17) of the crankpin (18) on the carrying part (side walls 14) corresponds approximately to the length of the crank arm (30).

## Revendications

1. Diable à un essieu, muni de poignées (16), de deux roues de roulement coaxiales (11, 12), d'un dispositif monte-marches à entraînement électromoteur et d'un moteur électrique à sens de rotation inversable (23), d'un démultiplicateur (24) et d'une batterie, caractérisé en ce que le moteur électrique à sens de rotation inversable (23), le démultiplicateur (24), la batterie (22) et les deux roues de roulement coaxiales (11, 12) sont montés sur une structure roulante (plate-forme 10) du diable, sur laquelle est montée une partie porteuse mobile qui supporte la charge à transporter (40), sur laquelle les poignées (16) prennent appui et qui est munie de deux roues d'appui coaxiales (32), et en ce que le moteur électrique (23) est relié à un dispositif de commande à manivelle (30/18) qui est monté sur la structure roulante et dont le tourillon de manivelle (18) agit sur la partie porteuse (paroi latérale 14).

2. Diable conforme à la revendication 1, caractérisé en ce que la roue à manivelle (27), qui peut être actionnée de manière continue par le moteur électrique (23) par l'intermédiaire d'un démultiplicateur autobloquant (24), est montée de façon concentrique par rapport à une roue de roulement (12), son bras de manivelle (30) étant plus court que le rayon de la roue de roulement et étant relié de manière articulée (point d'articulation 17) à la partie porteuse.

3. Diable conforme à la revendication 1 ou 2, caractérisé en ce que la structure roulante est munie d'au moins une barre de guidage (19) terminée par un tourillon de guidage (20) qui est logé dans une rainure de guidage (21) prévue dans la partie porteuse.

4. Diable conforme à l'une quelconque des revendications 1 à 3, caractérisé en ce que l'arbre de sortie du démultiplicateur (24) est relié à la roue à manivelle (27) du dispositif monte-marches par l'intermédiaire d'une chaîne d'entraînement (26).

5. Diable conforme à l'une quelconque des revendications 1 à 4, caractérisé en ce que les roues de roulement (11, 12) présentent un diamètre d'au moins 25 cm, et l'écartement le plus réduit entre l'essieu (33) des roues d'appui (32) et le point d'application (17) du tourillon de manivelle (18) sur la partie porteuse (parois latérales 14) correspond sensiblement à la longueur du bras de manivelle (30).

Fig. 1

Fig. 2

Fig. 3

Fig. 4

# Fig. 5

Fig. 6

41

40

12(11)

32

15

42

37

Fig. 7

Fig. 8

41

40

13

15

14

28

30

18

12 (11)

32

37